# EUROPEAN PATENT SPECIFICATION

(11) **EP 2 113 708 B1**
(45) Date of publication and mention of the grant of the patent: **04.04.2012**
(21) Application number: 08155603.7
(22) Date of filing: 02.05.2008
(51) Int. Cl.: F16L 55/165

(54) **Lining material and pipeline lining method**
Auskleidungsmaterial und Verfahren zur Rohrleitungsauskleidung
Matériau linéaire et procédé de pipeline linéaire

(43) Date of publication of application: 04.11.2009
(73) Proprietor: SHONAN GOSEI - JUSHI SEISAKUSHO K.K., Hiratsuka-shi, Kanagawa-ken, 254-0807 (JP)
(72) Inventor: Kamiyama, Takao, Hiratsuka-shi Kanagawa 254-0807 (JP); Kaneta, Koji, Hiratsuka-shi Kanagawa 254-0807 (JP); Fujii, Kenji, Hiratsuka-shi Kanagawa 254-0807 (JP); Tanaka, Fuminori, Hiratsuka-shi Kanagawa 254-0807 (JP)
(74) Representative: Kronthaler, Wolfgang N.K.

(56) References cited:
- EP-A- 1 719 946
- WO-A-88/09897
- FR-A- 2 503 622
- GB-A- 1 553 408
- GB-A- 2 206 174
- NL-C1- 1 018 733
- US-A- 5 778 938

## Description

The present invention relates to a lining material used to line pipelines in order to repair an aged pipeline, and a pipeline lining method using the same.

When a communications pipe, gas pipe, sewer pipe, water pipe, electrical pipe, or other pipeline buried under ground has aged and a pipe in the pipeline is to be repaired without the pipe being removed from the ground, pipeline lining methods are used in which a tubular pipe lining material impregnated with a thermosetting resin is inserted into the pipeline by pushing or drawing, the lining material is heated while being expanded by air pressure or the like and pressed against an inner peripheral surface of the pipeline, and the thermosetting resin of the lining material is cured to line the pipeline. Air pressure is used to evert and insert the lining material into the pipeline (e.g., Japanese Laid-open Patent Application No. 2006-123547 and, or US 5778938).

However, in the conventional insertion method for a lining material, insertion in pipelines is extremely difficult in sections that are bent at a right angle or close to a right angle. Specifically, with the method in which the material is pushed in while being everted, the eversion does not occur in the sections bent at a right angle or close to a right angle. Furthermore, with a drawing-in method, the contact resistance of the lining material increases as the bent sections increase, and the lining material therefore becomes heavier and is unable to be drawn in. If drawing in continued forcibly, the lining material is stretched and damaged, which dramatically reduces the product quality of the lining material.

An object of the present invention is to provide a lining assembly capable of being easily and smoothly inserted into a pipeline even where there is a plurality of sections bent at a right angle or close to a right angle, and to provide a pipeline lining method using the same.

The lining assembly of the present invention is a flexible tubular lining material impregnated with thermosetting resin, wherein an elastic and rigid strip member is removably attached to the lining material.

A pipeline lining method according to the invention uses a flexible tubular lining material impregnated with thermosetting resin and comprises the steps: removably attaching an elastic and rigid strip member to the lining material; drawing or inserting into a pipeline the lining material to which the strip member is attached; removing and extracting the strip member from the lining material while retaining the lining material inside the pipeline; and subjecting the lining material to pressure to cause it to expand against an inner peripheral surface of the pipeline and heating the lining material to cause the thermosetting resin thereof to be cured.

In the lining assembly of the present invention, the strip member imparts elasticity and rigidity to allow the trunk to be reinforced. Therefore, the lining assembly can be easily and smoothly inserted into a pipeline even where there is a plurality of sections bent at a right angle or close to a right angle, and it is possible to prevent the lining material from being stretched and damaged by forcible insertion. The lining material can be protected by the strip member during insertion, making it possible to prevent damage to the lining. The pipeline lining method of the present invention uses a lining assembly having a strip member of the present invention. Therefore, insertion of the lining assembly into a pipeline can be easily and smoothly performed, stretching and damage to the lining material can be prevented, and the time for lining work can be reduced.

Further features of the invention, its nature and various advantages will be more apparent from the accompanying drawings and following detailed description of the invention.
FIG. 1 is a schematic perspective view showing the structure of the lining material;
FIG. 2 is a cross-sectional view showing the lining material in FIG. 1 folded into the shape of an H and bound with a tape;
FIG. 3 is a cross-sectional view along the line A - A in Fig. 4, showing the belted lining material with steel belts attached on the lining material;
FIG. 4 is a side view showing the lining material with the steel belts attached;
FIG. 5 is an enlarged side view of a portion of the belted lining material;
FIG. 6 is an illustrative view showing a state in which the belted lining material is inserted into the lateral pipe from the main pipe;
FIG. 7 is a side view showing another embodiment of the lining material with the steel belts attached;
FIG. 8a is a cross-sectional view along the line B - B in FIG. 7;
FIG. 8b is a cross-sectional view along the line C - C in FIG. 7;
FIG. 9 is an illustrative view showing a state in which the belted lining material in FIG. 7 is inserted into the lateral pipe from the main pipe.
FIG. 10 is a cross-sectional view corresponding to Fig. 3, showing the belted lining material with steel belts attached on the lining material and with a hose accommodated therein; and
FIG. 11 is an illustrative view showing a state in which the belted lining material in FIG. 10 is inserted into the lateral pipe from the main pipe.

The present invention will now be described in detail with reference to the embodiments shown in the accompanying drawings.

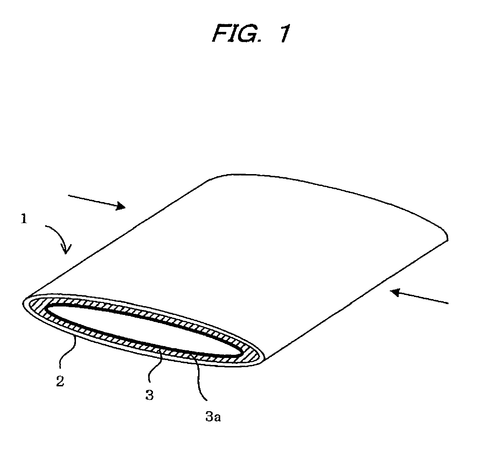

FIG. 1 shows a lining material used to repair pipelines. The lining material 1 is a flexible tubular material comprising a flexible cylindrical resin-absorbing material 3 of a non-woven fabric made of polyester, polypropylene, nylon, acrylic, vinylon, or the like whose exterior surface is covered by a flexible tube 2 of polyethylene, vinyl chloride or the like. The resin-absorbing material 3 is impregnated with an uncured liquid thermosetting resin such as unsaturated polyester resin, epoxy resin, or the like. The inner surface of the flexible cylindrical resin-absorbing material 3 is covered with a highly hermetic plastic film 3a of polyethylene, vinyl chloride or the like.

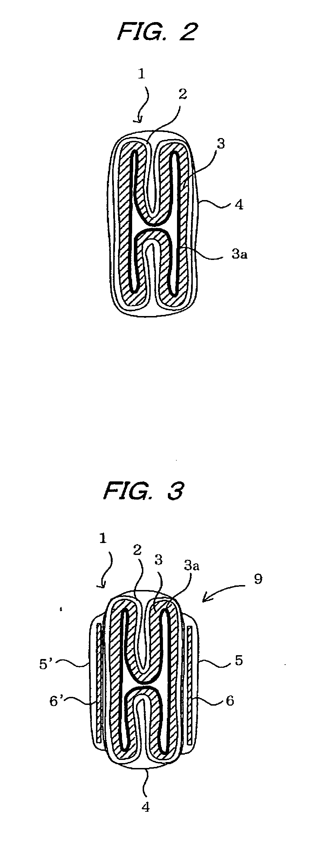

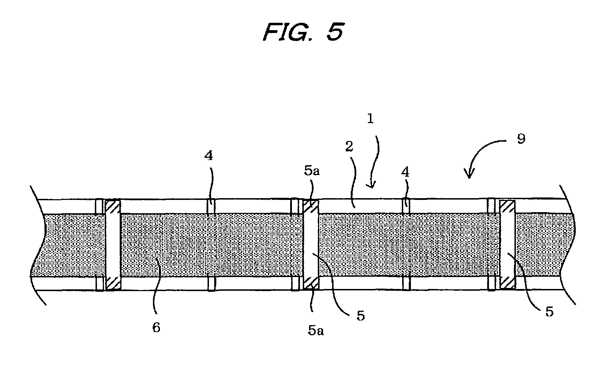

In the present embodiment, the lining material 1 is folded into the shape of an H and bound with a tape 4 so as to provide a reduced width, as shown in FIG. 2, and steel belts 6 and 6' as shown in FIGS. 3 to 5 are removably attached to the folded lining material to provide a steel-belted lining material 9 (hereafter abbreviated as belted lining material) in order to facilitate the insertion of the lining material into the pipeline.

The steel belts 6 and 6' are elastic and rigid, impart elasticity and rigidity to the lining material 1, and reinforce the trunk of the lining material 1. The belts also partially cover and protect the lining material 1. The belts 6 and 6' are composed of a thin steel plate, but it may be composed of strips of steel wire bundled together and covered with rubber and the like.

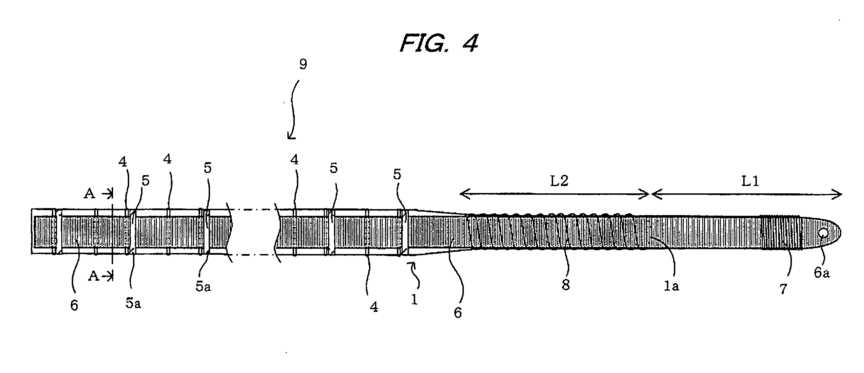

An opening 6a is formed respectively in the tip of the steel belts 6 and 6' as shown in FIG. 4. This opening 6a is used to tie a rope or the like for pulling the belted lining assembly 9 when inserting the belted lining assembly 9 into a pipeline.

To fabricate the belted lining material 9, the lining material 1 is first folded, as shown in FIG. 2, so that the cross section is in the shape of an H. As shown in FIGS. 2 and 4, a tape 4 such as cellophane tape is wound around the width of the lining material 1 at a suitable interval of approximately several tens of centimeters in the lengthwise direction of the lining material 1 to bind the lining material 1. It is acceptable to bind the material with a string or other member instead of tape 4.

Folding the lining material 1 is not limited to the shape of an H, and any shape is acceptable as long as the material easily extends when made to expand into a cylindrical shape upon application of pressure after inserting the lining material 1 into the pipeline.

Next, as shown in FIGS. 3 through 5, belt loops 5 and 5' for passing the steel belts 6 and 6' therethrough are attached on both sides in the lengthwise direction of the folded lining material 1 at suitable intervals, such as twice the interval of the tape 4. The belt loops 5 and 5' serve to guide the steel belt 6 and 6' therethrough with some space maintained and to prevent the steel belts 6 and 6' from shifting significantly from the lining material 1. The belt loops 5 and 5' are formed in a strip from a film such as polyethylene and the like, and both ends 5a of the belt loop 5 and 5' are secured by welding or the like to the exterior surface (the exterior surface of tube 2) of the folded lining material 1.

Next, as shown in FIGS. 3 through 5, the steel belts 6 and 6' are attached to each side surface in the lengthwise direction of the lining material 1 so as to sandwich the lining material 1. For this purpose, one steel belt 6 is inserted into the belt loops 5 on one side of the lining material 1 and the other steel belt 6' into the belt loops 5' on the other side thereof. As shown in FIG. 4, the ends of each steel belt extend a suitable length L1 (e.g., approximately 30 centimeters) from the end 1a of the lining material 1, and the steel belts 6 and 6' are fixed at the ends by being bound with a strong thread 7. A strong thread 8 is also used to wrap and tie the steel belts 6, 6' and the lining material 1 at the section extending a length of L2 (e.g., approximately 30 centimeters) from the end 1a of the lining material 1 in the direction opposite to the tip of the steel belt 6 and 6'. It is acceptable to use other materials such as string instead of the threads 7 and 8. This completes the belted lining assembly 9.

If the threads 7 and 8 are cut in the belted lining material 9, the bond between the ends of the steel belt 6 and 6' and the bond between the steel belts 6 and 6' and the end of the lining material 1 is disconnected. If each end of the steel belts 6 and 6' is pulled, the steel belts 6 and 6' can be pulled through each belt loop and removed from the lining material 1.

The belt loops 5 and 5' can be attached to the lining material 1 from the top of the steel belts 6 and 6' after the ends of the steel belts 6, 6' and the end of the lining material 1 have been fixed.

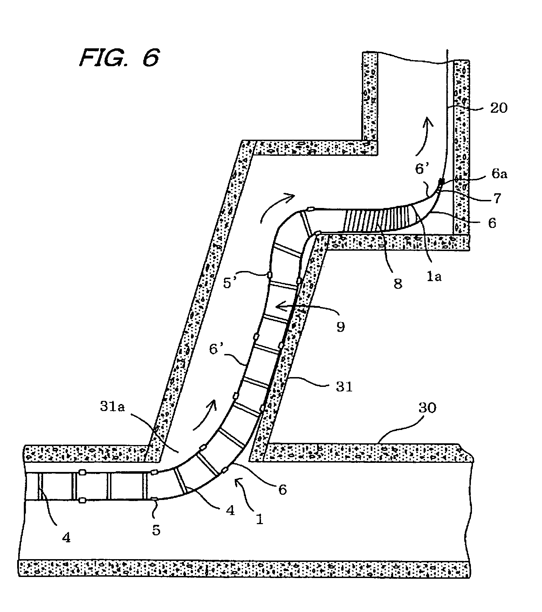

During the pipeline lining work, the belted lining assembly 9 prepared as indicated above is pushed or drawn into the pipeline, as shown in FIG. 6. If drawn in, the belted lining assembly 9 is tied with a rope or the like to the opening 6a on the ends of the steel belts 6 and 6' and is then pulled.

FIG. 6 shows the state where the belted lining assembly 9 is inserted into a bent lateral pipe 31 from a main pipe 30 of a pipeline. Compared to merely the lining material, the steel belts 6 and 6' impart elasticity and rigidity to the belted lining assembly 9, and reinforce th trunk. Furthermore, the width of the belted lining assembly 9 is narrower than the width of the original lining material 1 because it is folded. In particular, the section having a length of L1 from the end of the steel belt 6 does not sandwich the lining material, provides enhanced elasticity and flexibility, and easily bends in accordance with the bent sections of the pipeline that are bent at a right angle or close to a right angle, and fulfills the role of guiding subsequent sections.

Even if there is a plurality of locations that are bent at a right angle or close to a right angle in the lateral pipe 31, the contact resistance of the belted lining assembly 9 is low, the belted lining material 9 can be easily and smoothly inserted, and the time required for lining work can be reduced. Also, since the contact resistance is low and the steel belts 6 and 6' protects the lining material 1, it is possible to prevent stretching and damage to the lining material 1.

When insertion of the belted lining material 9 into the pipeline has been completed, the threads 7 and 8 at the ends of the belted lining assembly 9 are cut, which disconnects the bond between the ends of the steel belts 6 and 6' and the bond between the steel belts and the end of the lining material 1. If the two ends of the steel belts 6 and 6' are pulled, the steel belts 6 and 6' can be slid against the lining material 1 inside the pipeline. This allows the steel belts 6 and 6' to be pulled and extracted from the pipeline and the lining material 1 to be left inside the pipeline.

Next, the lining material 1 remaining inside the pipeline is made to expand via application of pressure from the inside, such as air pressure or the like. The strength of the tape 4 is set so that the tape 4 can be cut with the increased pressure at this point. The tape 4 is thus cut by the increased pressure, and the lining material 1 folded and bound by the tape 4 spreads out and expands into a cylindrical shape and is pressed against the inner peripheral surface of the pipeline. In this state, the lining material 1 is heated by a hot water shower or steam, the thermosetting resin impregnated into the lining material 1 is cured, and the pipeline is lined.

According to the embodiment as described above, the lining material can be easily and smoothly inserted into a pipeline with a plurality of locations that, as indicated above, are bent at a right angle or close to a right angle, and the time for lining work can be reduced. Also, stretching and damage can be prevented during insertion of the lining material, thus protecting the quality of the lining material.

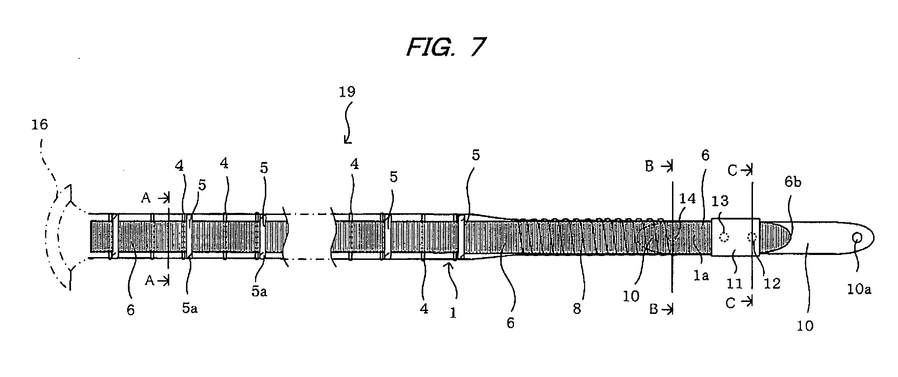

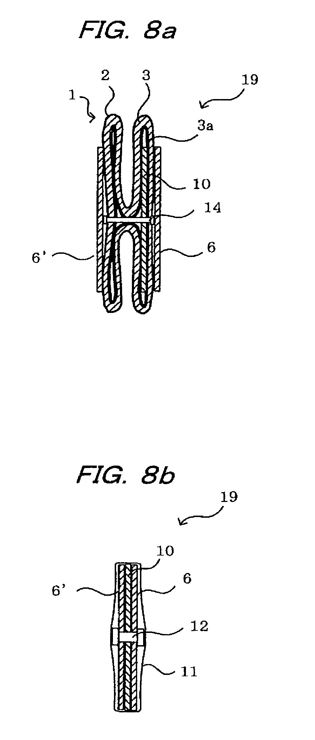

FIGS. 7, 8a and 8b show another embodiment of a belted lining assembly, denoted by the numerical symbol 19. Portions similar to those of the belted lining material 9 shown in FIGS. 3 through 5 are denoted by the same numerical symbols and are not described.

In the belted lining assembly 19 shown in FIGS. 7 and 8a, one end (tip end) 1a of the lining material 1 as seen in the lengthwise direction (length direction of the pipe) is linked using a rivet 14 or another such coupling implement with one end of another steel belt 10 having elasticity and rigidity in order to guide the lining material 1. A hole 10a for fastening a drawing rope 20 is formed in the other end of the steel belt 10. The steel belts 6 and 6' sandwiching the lining material 1 extend further than the tip end portion 1a of the lining material 1. The tip ends 6b of the steel belts 6 and 6' extend to the substantial center of the steel belt 10, and the steel belts 6, 6' are fixed to the steel belt 10 in the center of the steel belt 10 via rivets 12, 13 or other such coupling implements (FIG. 8b). The rivets 12, 13 are covered using a plastic tape 11 having a smooth surface in order to prevent the rivets 12, 13 from coming into contact with the inner wall of a pipe and failing to be smoothly drawn in when the belted lining assembly 19 is inserted into a pipe. Since the steel belt 10 and the steel belts 6, 6' are linked by rivets or the like, the linked portions can be prevented from losing elasticity in comparison with coupling using welding or another method.

As with the belted lining assembly 9, the steel belts 6, 6' are bound to the tip end portion of the lining material 1 with a strong thread 8, and the lining material 1 and the steel belts 6, 6' are fixed to each other so as to not separate.

In cases in which this type of belted lining material 19 is used as a lining material for a lateral pipe, a flange-like collar is formed at the back end of the lining material 1, and this collar is depicted by the imaginary line 16 in FIG. 7.

This type of belted lining assembly 19 is inserted from the tip end into a pipe by being pushed or drawn in, similar to the belted lining assembly 9.

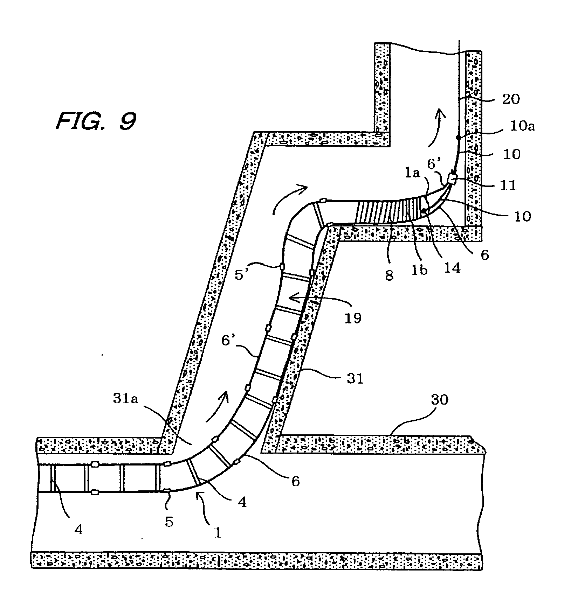

FIG. 9 shows the manner in which the belted lining assembly 19 is inserted from the main pipe 30 into the bent lateral pipe 31 via a lateral pipe opening 31a.

In FIG. 9, the belted lining material 19 is drawn into the lateral pipe 31 via the lateral pipe opening 31a by fastening the drawing rope 20 in the hole 10a of the steel belt 10 and winding up the drawing rope 20 from above ground.

The belted lining assembly 19 is further drawn in until the tip end of the lining material 1 appears above ground. The thread 8 is then cut to undo the link between the steel belts 6, 6' and the lining material 1, and the lining material 1 is cut at the portion 1b so as to be disconnected from the steel belt 10. If the steel belt 10 is pulled, the steel belts 6, 6' can be pulled out of the belt loops 5, 5' and removed from the lining material 1.

The lining material 1 remaining in the lateral pipe is then subjected to air pressure or the like from the inside and made to expand. At this time, the tape 4 is cut by the application of pressure, and the folded lining material 1 widens and expands into a tubular shape and comes into pressured contact with the internal peripheral surface of the lateral pipe 31. In this state, the lining material 1 is heated by hot water, steam, or another such heating medium, and the thermosetting resin impregnated in the lining material 1 is cured, thus lining the lateral pipe.

This type of belted lining assembly 19, as compared with the belted lining assembly 9, can be readily inserted with minimal obstruction into a lateral pipe having a large number of sections bent at a right angle or approximately a right angle. This is because the lining material 1 is directly fixed via the coupling implement 14 to the steel belt 10, and the lining material 1 can be directly pulled via the steel belt 10.

The drawing in or pushing in of the entire lining material is also more reliable because the steel belts 6, 6' attached at both sides of the lining material are linked to the steel belt 10 for guiding the lining material 1.

Since the steel belts 6, 6' impart overall elasticity and rigidity to strengthen the trunk, the lining material can be readily and smoothly inserted into a pipe having a large number of sections bent at a right angle or approximately a right angle, and damage to the lining material can be prevented because the lining material is protected by the steel belts 6, 6' while being inserted into the pipe.

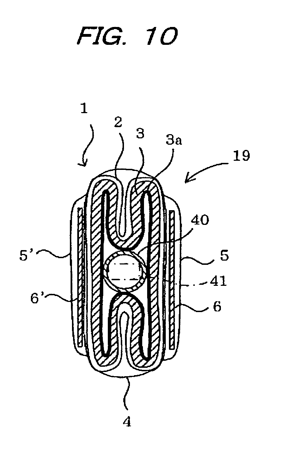

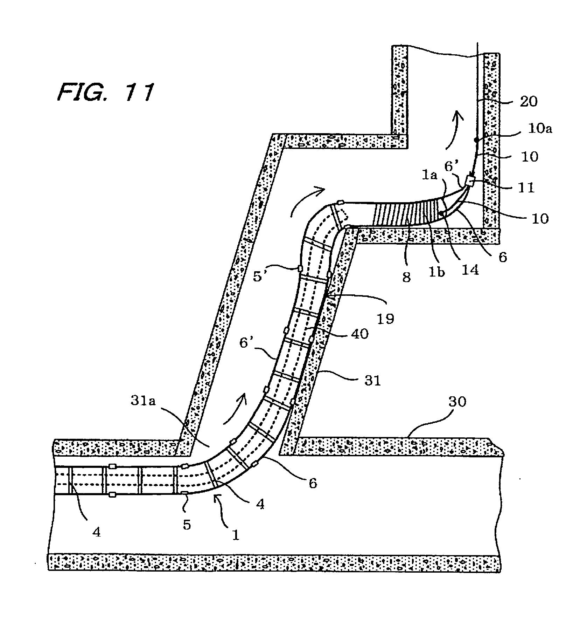

A hose for guiding hot water, steam, or another such heating medium for curing the thermosetting resin impregnated in the lining material can be provided in the interior of the belted lining assembly 9 or 19. An example of this is shown in FIGS. 10 and 11. A belted lining material houses a hose 40 of a substantially equal length to the lining assembly 19, as shown in FIGS. 10 and 11. After insertion of the belted lining assembly 19 into the pipe is complete, the lining material 1 is left in the pipe while the steel belts 6, 6' are pulled out of the pipe, and pressure is applied to the lining material 1 to bring it into pressured contact with the internal peripheral surface of the pipe; hot water, steam, or another such heating medium is supplied from the end of the hose 40 nearer the main pipe. Since the main pipe 30 is plugged so that water may not flow, the heating medium discharged from the tip end of the hose 40 accumulates up to the lateral pipe 31. This causes the lining material 1 in the lateral pipe 31 to be heated to cure the thermosetting resin impregnated in the lining material 1 and line the lateral pipe 31. Preferably, the hose 40 may be provided with a large number of holes, and the heating medium may be blown out of these holes as a shower or mist onto the internal peripheral surface of the lining material 1 in pressure contact against the pipe internal peripheral surface in order to cure the lining material 1. In cases in which the heating medium is hot water, the hot water can also be circulated.

In cases in which the lateral pipe is bent, problems are encountered in that wrinkles form in the resin inside the lining material at the bent sections, making uniform lining impossible. Therefore, an elastic and rigid member (for example, steel) is inserted in advance into the hose 40 to impart elasticity and rigidity thereto, as shown by the imaginary lines 41 in FIG. 10. While the resin in the lining material is being cured, the hose 40 is moved up and down to rub against the internal peripheral surface of the lining material and stretch out the wrinkles that have formed in the resin in the lining material. This makes uniform lining in the pipe possible even when the pipe is bent.

According to the embodiment as described above, the steel belts 6 and 6' can be attached across the entire length of the lining material 1, or can be attached across a portion of the entire length of the lining material 1.

In the embodiment, two steel belts 6 and 6' are attached so as to sandwich the lining material 1, but it is acceptable to attach only one belt to one side of the lining material 1. It is also acceptable to attach three or more belts so as to enclose the lining material 1.

Furthermore, instead of the steel belt, another elastic and rigid belt member composed of a non-steel metal, plastic, or other material can be attached to the lining material 1.

The lining material of the present invention can be used not only as a lining for a communications pipe, gas pipe, sewer pipe, water pipe, electrical pipe, or other subterranean pipeline, but also as a lining for a communications pipe, gas pipe, sewer pipe, water pipe, electrical pipe, or other pipeline inside apartment buildings, office buildings, and other buildings.

## Claims

1. A tubular lining assembly for inserting into a pipeline (31) to be repaired, comprising a flexible tubular lining material (1) impregnated with a thermosetting resin, and a first and a second elastic and rigid strip member (6, 6') designed as belts composed of steel or a non-steel metal, wherein the lining material (1) is folded so as to have a reduced width, and the first strip member (6) is removably attached to one side of the folded lining material and the second strip member (6') removably attached to the other side thereof to sandwich and reinforce the lining material therebetween, and wherein the first and second strip members (6, 6') are removable attached to the lining material (1) so that they are removable from the lining material after the tubular lining assembly has been inserted into the pipeline (31) while the lining material is retained inside the pipeline.

2. A tubular lining assembly according to claim 1, wherein the first and the second strip member (6, 6') is a steel belt.

3. A tubular lining assembly according to claim 1 or 2, wherein the strip members (6, 6') are attached along the entire length of the lining material (1).

4. A tubular lining assembly according to one of claims 1 to 3, wherein the strip members (6, 6') are attached along a portion of the entire length of the lining material (1).

5. A tubular lining assembly according to one of claims 1 to 4, wherein the first and second strip members (6, 6') are attached to the lining material (1) so that the tips of said strip members (6, 6') protrude from the tip (1a) of the lining material (1).

6. A tubular lining assembly according to one of claims 1 to 5, wherein a third elastic and rigid strip member (10) designed as a belt composed of steel or a non-steel metal is fixedly attached to the tip (1a) of the lining material (1) in order to guide the lining material (1).

7. A tubular lining assembly according to claim 6, wherein the first and second strip member (6, 6') extends substantially to the center of the third strip member (10) and is fixed thereto.

8. A tubular lining assembly according to claim 5 or 6, wherein the third strip member (10) is a steel belt.

9. A tubular lining assembly according to one of claims 1 to 8, wherein the lining material (1) houses a hose (40) for guiding a heating medium that cures the thermosetting resin impregnated therein.

10. A pipeline lining method using a tubular lining assembly comprising a flexible tubular lining material (1) impregnated with a thermosetting resin, and a first and a second strip member (6, 6') according to one of claims 1 to 9, comprising the steps:
drawing or inserting the tubular lining assembly into a pipeline (31) to be repaired;
removing and extracting the first and the second strip member (6, 6') from the lining material (1) while retaining the lining material (1) inside the pipeline (31); and
subjecting the lining material (1) to pressure to cause it to expand against an inner peripheral surface of the pipeline (31) and heating the lining material (1) to cause the thermosetting resin therein to be cured.

## Patentansprüche

1. Rohrförmige Auskleidungsanordnung zum Einsetzen in eine zu reparierende Rohrleitung (31), umfassend ein flexibles, rohrförmiges Auskleidungsmaterial (1), das mit einem wärmehärtbaren Harz imprägniert ist, und ein erstes und zweites elastisches und steifes Streifenelement (6, 6'), die als aus Stahl oder einem anderen Metall als Stahl gebildete Bänder ausgebildet sind, wobei das Auskleidungsmaterial (1) so gefaltet ist, dass es eine verminderte Breite aufweist, und das erste Streifenelement (6) lösbar an einer Seite des gefalteten Auskleidungsmaterials und das zweite Streifenelement (6') an dessen anderer Seite lösbar angebracht ist, um das Auskleidungsmaterial dazwischen einzulegen und zu verstärken, und wobei die ersten und zweiten Streifenelemente (6, 6') lösbar am Auskleidungsmaterial (1) angebracht sind, so dass sie vom Auskleidungsmaterial lösbar sind, nachdem die rohrförmige Auskleidungsanordnung in die Rohrleitung (31) eingesetzt wurde, während das Auskleidungsmaterial in der Rohrleitung verbleibt.

2. Rohrförmige Auskleidungsanordnung nach Anspruch 1, wobei das erste und das zweite Streifenelement (6, 6') Stahlbänder sind.

3. Rohrförmige Auskleidungsanordnung nach Anspruch 1 oder 2, wobei die Streifenelemente (6, 6') entlang der gesamten Länge des Auskleidungsmaterials (1) angebracht sind.

4. Rohrförmige Auskleidungsanordnung nach einem der Ansprüche 1 bis 3, wobei die Streifenelemente (6, 6') entlang einem Teil der gesamten Länge des Auskleidungsmaterials (1) angebracht sind.

5. Rohrförmige Auskleidungsanordnung nach einem der Ansprüche 1 bis 4, wobei das erste und zweite Streifenelement (6, 6') am Auskleidungsmaterial (1) so angebracht sind, dass die Spitzen der Streifenelemente (6, 6') von der Spitze (1a) des Auskleidungsmaterials (1) vorstehen.

6. Rohrförmige Auskleidungsanordnung nach einem der Ansprüche 1 bis 5, wobei ein drittes elastisches und steifes Streifenelement (10), das als aus Stahl oder einem anderen Metall als Stahl gebildetes Band ausgebildet ist, fest an der Spitze (1a) des Auskleidungsmaterials (1) angebracht ist, um das Auskleidungsmaterial (1) zu führen.

7. Rohrförmige Auskleidungsanordnung nach Anspruch 6, wobei sich das erste und zweite Streifenelement (6, 6') im Wesentlichen bis zur Mitte des dritten Streifenelementes (10) hin erstrecken und daran befestigt sind.

8. Rohrförmige Auskleidungsanordnung nach Anspruch 5 oder 6, wobei das dritte Streifenelement (10) ein Stahlband ist.

9. Rohrförmige Auskleidungsanordnung nach einem der Ansprüche 1 bis 8, wobei das Auskleidungsmaterial (1) einen Schlauch (40) aufnimmt, um darin ein Heizmedium, welches das darin imprägnierte, wärmehärtbare Harz aushärtet, zu führen.

10. Verfahren zum Auskleiden einer Rohrleitung unter Verwendung einer rohrförmigen Auskleidungsanordnung, umfassend ein flexibles, rohrförmiges Auskleidungsmaterial (1), das mit einem wärmehärtbaren Harz imprägniert ist, und ein erstes und zweites Streifenelement (6, 6') nach einem der Ansprüche 1 bis 9, umfassend die Schritte:
Ziehen oder Einsetzen der rohrförmigen Auskleidungsanordnung in eine zu reparierende Rohrleitung (31);
Lösen und Herausziehen des ersten und zweiten Streifenelementes (6, 6') aus dem Auskleidungsmaterial (1), während das Auskleidungsmaterial (1) gleichzeitig in der Rohrleitung (31) verbleibt, und
Beaufschlagen des Auskleidungsmaterials (1) mit Druck, um dessen Expansion gegen eine Innenumfangsfläche der Rohrleitung (31) zu bewirken, und Erwärmen des Auskleidungsmaterials (1), um das Aushärten des wärmehärtbaren Harzes darin zu bewirken.

## Revendications

1. Ensemble de revêtement tubulaire destiné à être inséré dans une tuyauterie (31) à réparer, ledit ensemble comprenant un matériau de revêtement (1) flexible et tubulaire, imprégné d'une résine thermodurcissable, et comprenant en outre un premier et un deuxième élément sous forme de bande (6, 6') élastiques et rigides, qui sont réalisés en tant que bandes composées d'acier ou d'un métal qui n'est pas l'acier, le matériau de revêtement (1) étant plié de manière à présenter une largeur réduite, et le premier élément sous forme de bande (6) étant attaché de manière détachable à un côté du matériau de revêtement plié et le deuxième élément sous forme de bande (6') étant attaché de manière détachable à son autre côté pour placer le matériau de revêtement en sandwich entre eux et pour le renforcer, les premier et deuxième éléments sous forme de bande (6, 6') étant attachés de manière détachable au matériau de revêtement (1) pour permettre leur détachement du matériau de revêtement après insertion de l'ensemble de revêtement tubulaire dans la tuyauterie (31) tout en retenant le matériau de revêtement à l'intérieur de la tuyauterie.

2. Ensemble de revêtement tubulaire selon la revendication 1, dans lequel les premiers et deuxièmes éléments sous forme de bande (6, 6') sont des bandes en acier.

3. Ensemble de revêtement tubulaire selon la revendication 1 ou 2, dans lequel les éléments sous forme de bande (6, 6') sont attachés sur toute la longueur du matériau de revêtement (1).

4. Ensemble de revêtement tubulaire selon l'une quelconque des revendications 1 à 3, dans lequel les éléments sous forme de bande (6, 6') sont attachés sur une partie de la longueur entière du matériau de revêtement (1).

5. Ensemble de revêtement tubulaire selon l'une quelconque des revendications 1 à 4, dans lequel les premier et deuxième éléments sous forme de bande (6, 6') sont attachés au matériau de revêtement (1) de manière à ce que les pointes des éléments sous forme de bande (6, 6') fassent saillie de la pointe (1a) du matériau de revêtement (1).

6. Ensemble de revêtement tubulaire selon l'une quelconque des revendications 1 à 5, dans lequel un troisième élément sous forme de bande élastique et rigide (10), qui est réalisé sous forme d'une bande composée d'acier ou d'un métal qui n'est pas l'acier, est monté fixe à la pointe (1a) du matériau de revêtement (1) pour guider le matériau de revêtement (1).

7. Ensemble de revêtement tubulaire selon la revendication 6, dans lequel les premier et deuxième éléments sous forme de bande (6, 6') s'étendent sensiblement jusqu'au centre du troisième élément sous forme de bande (10) et sont attachés à celui-ci.

8. Ensemble de revêtement tubulaire selon la revendication 5 ou 6, dans lequel le troisième élément sous forme de bande (10) est une bande en acier.

9. Ensemble de revêtement tubulaire selon l'une quelconque des revendications 1 à 8, dans lequel le matériau de revêtement (1) loge un tuyau souple (40) pour guider un médium de chauffage qui durcit la résine thermodurcissable imprégnée là-dedans.

10. Procédé de revêtement d'une tuyauterie par utilisation d'un ensemble de revêtement tubulaire comprenant un matériau de revêtement (1) flexible et tubulaire, qui est imprégné d'une résine thermodurcissable, et comprenant en outre un premier et un deuxième élément sous forme de bande (6, 6') selon l'une quelconque des revendications 1 à 9, ledit procédé comprenant les étapes de:
tirer ou insérer l'ensemble de revêtement tubulaire dans une tuyauterie (31) à réparer;
détacher et extraire du matériau de revêtement (1) les premier et deuxième éléments sous forme de bande (6, 6') tout en retenant le matériau de revêtement (1) à l'intérieur de la tuyauterie (31), et
mettre le matériau de revêtement (1) en pression pour effectuer son expansion contre une surface de périphérie intérieure de la tuyauterie (31), et échauffer le matériau de revêtement (1) pour effectuer le durcissement de la résine thermodurcissable dans celui-ci.
